# EUROPEAN PATENT SPECIFICATION

(11) **EP 4 247 747 B1**
(45) Date of publication and mention of the grant of the patent: **23.04.2025**
(21) Application number: 21894099.7
(22) Date of filing: 19.11.2021
(51) Int. Cl.: B66C 13/08, B66C 13/16, B66C 13/46, B66D 1/30, G01B 3/00, G01B 5/02

(54) **ROPE HOIST**
SEILWINDE
PALAN À CÂBLE

(30) Priority: 23.11.2020 FI 20206191
(43) Date of publication of application: 27.09.2023
(73) Proprietor: Konecranes Global Corporation, 05830 Hyvinkää (FI)
(72) Inventor: RANTALA, Kimmo, 05830 Hyvinkää (FI)
(74) Representative: Kolster Oy Ab
(86) International application number: PCT/FI2021/050793
(87) International publication number: WO 2022/106758

(56) References cited:
- WO-A1-2013/041770
- CN-U- 209 399 893
- JP-A- H08 319 088
- JP-A- S54 138 267
- JP-U- S5 191 481
- US-A- 922 554

## Description

### BACKGROUND OF THE INVENTION

The invention relates to a rope hoist, which comprises a rope drum for a hoisting rope to be winded thereon and a rope drum cover for partially surrounding the rope drum.

When a load is handled with the rope hoist, a user of the crane naturally aims to be in a convenient viewing angle so that the user can see the location of the load in different situations when the load is being moved, lifted or lowered. If it is difficult to see the lifting equipment or the load, or if there is no line of sight, determining the height position of the lifting is difficult or impossible. These kinds of situations can be, for example, lowering the load behind a partition or down into a deep shaft, for instance in a multifloored factory hall down a lifting opening. The load to be lowered can be, for example, a big reel or a turbine, which must be lowered from a machine hall to a basement floor to be loaded into a semi-trailer. This can take place in a paper mill or a power plant.

Lifting height is known to be defined by measurements from an axle of the rope drum or a hoisting motor by a tachometer, for example. The knowledge could be used for electronic control of the unit, but it is not necessary displayed to the user of the hoist as such that will reveal the location of the load from the target platform. For example, in publication WO 2013/041770 A1 discloses a known method of measurement. Measurements that do not relate directly to industrial cranes or aforementioned operating conditions have been disclosed, for example, in publications US 20130013251 A1 and JP 2007223776 A. Furthermore, CN209399893U discloses a wire rope length measuring device with a scale and cursor for detecting progress of a single layer winding.

### SUMMARY OF THE INVENTION

An object of the present invention is to overcome the above problems. The object is achieved by a rope hoist according to the present invention, as defined in claim 1, in which visually observable or readable means are arranged on the rope drum cover for detecting winding or unwinding position of the hoisting rope on the rope drum and therefore, indicating the lifting height of the load attached to the hoisting rope. The visually observable or readable means are arranged on the rope drum cover in axial direction of the rope drum and comprise a scale arranged on the rope drum cover. The scale is formed of parallel openings arranged on the rope drum cover, or the scale is formed of parallel alternating toothed structure formed of substantially rectangular protrusions and recesses.

The preferred embodiments of the invention are disclosed in the dependent claims.

The invention is based on the idea of a visual indicator, such as arranging a scale implemented in different ways, whereby a distinct eye-catching colour of the hoisting rope winded onto the rope drum can be easily detected and estimated or seen directly from the indicator the height position of the load to be lifted, although the load cannot be seen. Since this measurement is not based on electronically computationally obtained result, neither errors to indicate the lifting height will occur.

The indicator according to the invention is extremely easy to implement in connection with the rope drum cover, whereby it is also very cost effective.

### BRIEF DESCRIPTION OF THE DRAWINGS

In the following the invention will be described in greater detail by means of preferred embodiments with reference to the attached drawings, in which
Figure 1 illustrates a non-claimed implementation viewed substantially from below or angled from downwards of the rope hoist;
Figure 2 illustrates an implementation according to the invention in the same angle of view as in Fig. 1;
Figure 3 illustrates another implementation according to the invention also in the same angle of view as in Fig. 1.

### DETAILED DESCRIPTION OF THE INVENTION

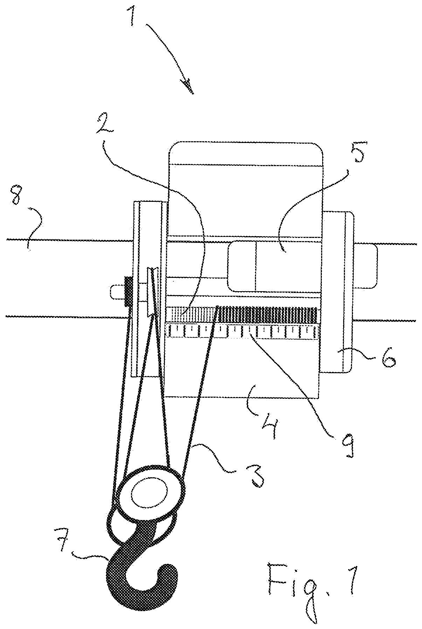

Referring to Figures 1-3 illustrating a rope hoist 1 comprising a rope drum 2 for a hoisting rope 3 to be winded thereon and a rope drum cover 4 for partially surrounding the rope drum 2. The rope drum 2 has a single layer winding for the hoisting rope 3. For the hoisting rope 3, the rope drum 2 has an ascending rope groove, wherein in a longitudinal direction in mind, same position of the hoisting rope 3 settles in the rope groove at the same position in the ascending groove.

The rope hoist further comprises a motor 5 and a gearing 6 for operating the rope drum 2 and lifting means 7 connected to the hoisting rope 3 for lifting the load attached thereto. The rope hoist 1 moves along a main girder 8. The main girder 8 can move on rails (not shown in Figures) so that the main girder 8 is usually supported by said rails at its ends.

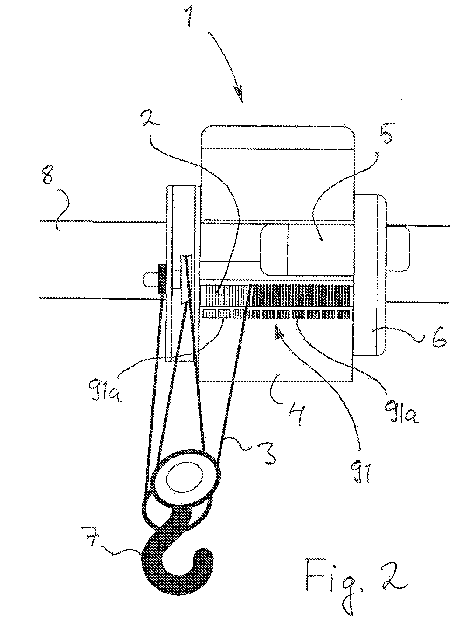

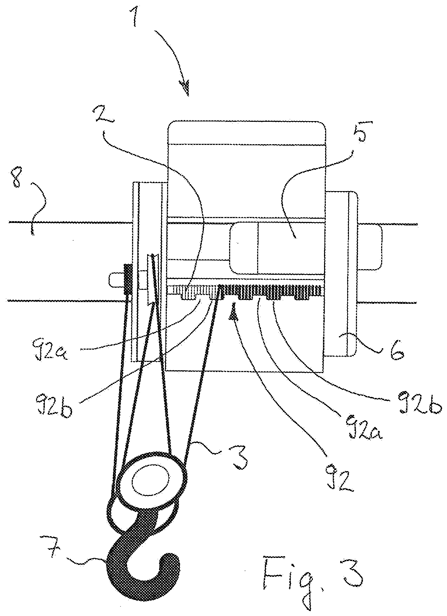

On the rope drum cover 4 has been arranged according to the invention visually observable or readable means 9 (Fig. 1); 91 (Fig. 2); 92 (Fig. 3) for detecting winding or unwinding positions of the hoisting rope 3 on the rope drum 2 and therefore, indicating the lifting height of the load attached to the hoisting rope 3. In all the solutions according to Figures 1-3, these visually observable or readable means 9; 91; 92 are arranged on the rope drum cover in an axial direction of the rope drum 2.

In the exemplary implementations illustrated in Figures 1-3 these visually observable or readable means comprise a scale 9; 91; 92 arranged on the rope drum cover.

In the implementation according to Figure 1, which is not within the scope of the independent claim, said scale 9 can be a separate component, which is attached to the edge of the rope drum cover 4, for example with a sticker. The scale 9 can also be formed directly at the edge of the rope drum cover 4, for example with a distinct colour distinguishable from the colour of the rope drum cover 4.

In the solution according to Figure 2, the scale 91 is formed of parallel openings 91a arranged on the rope drum cover.

In the implementation according to Figure 3, the scale 92 is formed of parallel alternating toothed structure formed of substantially rectangular protrusions 92a and recesses 92b.

The measurement utilizes directly progressive or regressive front line of the hoisting rope 3 in the rope groove as indicator compared to the scale 9; 91; 92, where the scale is substantially perpendicular to the progressive or regressive front line. The progressive or regressive front line of the hoisting rope 3 is immediately alongside the scale 9; 91; 92.

Legibility of the scale 9; 91; 92 in the aforementioned embodiments can be improved by adding coarser measuring lines next to monotone measuring lines. With the two-tiered scale, the human eye detects and remembers the differences more clearly, and vertical height of the lifting can be better repeatable in sequential lifting processes. Utilizing different colours can also improve legibility between the adjacent steps or tiers of the scale.

Using the indicator according to the invention at a rough estimate is not necessary particularly precise but is very useful approximative indicator of the lifting height compared to a situation when the lifting height is not known at all. The scale is read so that the user of the device distinguishes uniform amount of the rope on the rope drum, and the front line of the edge of the rope in the rope groove indicates the amount of the rope on the rope drum. The user consequently compares the front line of the edge of the rope to the scale. For the sake of clarity, upper and lower limits of the lifting height can also be marked distinctly on the scale, for example with indicator stickers glued on the scale during the introduction of the hoist. This would be preferable especially in situations where heavy loads are lifted to high places in relation to the user of the hoist, for example on a truck platform or over tall obstacles. If the hoist further comprises a rope guide, "a pointer" could be installed on the rope guide to indicate the position of the rope.

The lifting height indicator according to the invention is adapted especially well to be utilized, when the hoisting rope 3 is chosen from a group, which does not include metal ropes. Typically, the hoisting rope 3 is synthetic material having a colour which is clearly distinct from dark or the colour of the rope hoist 2, for example orange. Synthetic hoisting rope is used without grease, also known as lubrication, so it does not change to black in use such as metal ropes which require lubrication. Neither will the grease spread disadvantageously down from the hoist.

The loads to be lifted can vary from light to heavy, in which case an elongation according to the magnitude of the load is directed towards the hoisting rope 3. The variation of elongation does not have remarkable significance in indicating the length in the height direction with the scale 9; 91; 92 according to the invention.

The aforementioned description of the invention is only meant to exemplify the basic idea according to the invention. A skilled person can, however, implement its details within the scope of the claims.

## Claims

1. A rope hoist, which comprises a rope drum (2) for a hoisting rope (3) to be winded thereon and a rope drum cover (4) for partially surrounding the rope drum (2), the rope hoist is arranged to move along a main girder (8), the main girder (8) is movable on rails, wherein the main girder (8) is supported by said rails at its ends, wherein visually observable or readable means (9; 91; 92) for detecting winding or unwinding positions of the hoisting rope (3) on the rope drum (2) are arranged on the rope drum cover (4), and to indicate lifting height of a load attached to the hoisting rope (3),
the visually observable or readable means (9; 91; 92) are arranged on the rope drum cover (4) in axial direction of the rope drum (2) and comprise a scale (9; 91; 92) arranged on the rope drum cover (4), **characterized in that**
the scale (91) is formed of parallel openings (91a) arranged on the rope drum cover (4), or
the scale (92) is formed of parallel alternating toothed structure formed of substantially rectangular protrusions (92a) and recesses (92b).

2. The rope hoist according to claim 1, **characterized in that** the hoisting rope (3) is chosen from a group, which does not include metal ropes.

3. The rope hoist according to claim 2, **characterized in that** the hoisting rope (3) is a synthetic rope.

## Patentansprüche

1. Seilzug, der eine Seiltrommel (2) für ein Hebeseil (3), das darauf aufzuwickeln ist, und eine Seiltrommelabdeckung (4) zum teilweisen Umgeben der Seiltrommel (2) umfasst, wobei der Seilzug angeordnet ist, sich entlang eines Hauptträgers (8) zu bewegen, der Hauptträger (8) auf Schienen bewegbar ist, wobei der Hauptträger (8) an den Enden von den Schienen gestützt wird, wobei an der Seiltrommelabdeckung (4) visuell beobachtbare oder lesbare Mittel (9; 91; 92) zum Detektieren von Aufwickel- oder Abwickelpositionen des Hebeseils (3) an der Seiltrommel (2) und zum Anzeigen einer Hebehöhe einer am Hebeseil (3) befestigten Last angeordnet sind,
wobei die visuell beobachtbaren oder lesbaren Mittel (9; 91; 92) an der Seiltrommelabdeckung (4) in einer Axialrichtung der Seiltrommel (2) angeordnet sind und eine Skala (9; 91; 92) umfassen, die an der Seiltrommelabdeckung (4) angeordnet ist, **dadurch gekennzeichnet, dass**
die Skala (91) von parallelen Öffnungen (91a) gebildet ist, die an der Seiltrommelabdeckung (4) angeordnet sind, oder
die Skala (92) aus einer parallelen alternierenden gezahnten Struktur gebildet ist, die aus im Wesentlichen rechteckigen Vorsprüngen (92a) und Ausnehmungen (92b) gebildet ist.

2. Seilzug nach Anspruch 1, **dadurch gekennzeichnet, dass** das Hebeseil (3) aus einer Gruppe gewählt ist, die keine Metallseile beinhaltet.

3. Seilzug nach Anspruch 2, **dadurch gekennzeichnet, dass** das Hebeseil (3) ein synthetisches Seil ist.

## Revendications

1. Palan à câble, qui comprend un tambour de câble (2) pour enrouler un câble de levage (3) sur ce dernier et un couvercle de tambour de câble (4) pour entourer partiellement le tambour de câble (2), le palan à câble est agencé pour se déplacer le long d'une poutre principale (8), la poutre principale (8) est mobile sur des rails, dans lequel la poutre principale (8) est supportée par lesdits rails au niveau de ses extrémités, dans lequel des moyens visuellement observables ou lisibles (9 ; 91 ; 92) pour détecter les positions d'enroulement ou de déroulement du câble de levage (3) sur le tambour de câble (2) sont agencés sur le couvercle de tambour de câble (4) et pour indiquer la hauteur de levage d'une charge fixée au câble de levage (3),
les moyens visuellement observables ou lisibles (9 ; 91 ; 92) sont agencés sur le couvercle de tambour de câble (4) dans la direction axiale du tambour de câble (2) et comprennent une échelle (9 ; 91 ; 92) agencée sur le couvercle de tambour de câble (4), **caractérisé en ce que** :
l'échelle (91) est formée avec des ouvertures parallèles (91a) agencées sur le couvercle de tambour de câble (4), ou bien
l'échelle (92) est formée avec une structure dentée parallèle alternée formée avec des saillies (92a) sensiblement rectangulaires et des évidements (92b).

2. Palan à câble selon la revendication 1, **caractérisé en ce que** le câble de levage (3) est choisi dans un groupe qui ne comprend pas les câbles métalliques.

3. Palan à câble selon la revendication 2, **caractérisé en ce que** le câble de levage (3) est un câble synthétique.
